# EUROPEAN PATENT APPLICATION

(11) **EP 4 235 858 A1**
(43) Date of publication of application: **30.08.2023**
(21) Application number: 21893411.5
(22) Date of filing: 09.07.2021
(51) Int. Cl.: H01M 4/36

(54) **POSITIVE ELECTRODE LITHIUM-SUPPLEMENTING AGENT, PREPARATION METHOD THEREFOR AND USE THEREOF**

(30) Priority: 23.11.2020 CN 202011332764
(71) Applicant: Huawei Technologies Co., Ltd., Shenzhen, Guangdong 518129 (CN)
(72) Inventor: LI, Shuoyu, Shenzhen, Guangdong 518129 (CN); XIA, Shengan, Shenzhen, Guangdong 518129 (CN); LEI, Yu, Shenzhen, Guangdong 518129 (CN); SHA, Yujing, Shenzhen, Guangdong 518129 (CN)
(74) Representative: Gill Jennings & Every LLP
(86) International application number: PCT/CN2021/105363
(87) International publication number: WO 2022/105259

(57) **Abstract**

Embodiments of this application provide a positive-electrode pre-lithiation agent, including a catalyst and a lithium-rich material, where the catalyst is an oxide positive-electrode active material, an intensity ratio of a crystal plane diffraction peak (003) of the catalyst to a crystal plane diffraction peak (104) of the catalyst is less than or equal to 2, the catalyst is configured to catalyze the lithium-rich material to decompose to release active lithium, and the lithium-rich material includes at least one of lithium oxide, lithium peroxide, lithium fluoride, lithium carbonate, lithium oxalate, and lithium acetate. Due to the catalyst, the positive-electrode pre-lithiation agent can release active lithium ions at a low voltage, and residues left after delithiation do not increase a risk of gas production by electrolyte of a battery and do not increase impedance of an electrochemical cell, thereby achieving good pre-lithiation effect. Embodiments of this application further provide a preparation method for the positive-electrode pre-lithiation agent, a positive electrode plate for a battery, an electrochemical battery, and a terminal.

## Description

This application claims priority to Chinese Patent Application No. 202011332764.2, filed with the China National Intellectual Property Administration on November 23, 2020 and entitled "POSITIVE-ELECTRODE PRE-LITHIATION AGENT, AND PREPARATION METHOD AND APPLICATION THEREOF", which is incorporated herein by reference in its entirety.

### TECHNICAL FIELD

Embodiments of this application relate to the field of battery technologies, and in particular, to a positive-electrode pre-lithiation agent for a positive electrode of a battery, and a preparation method and application thereof.

### BACKGROUND

With development of economy, science, and technology, energy storage devices with higher energy density and longer cycle life are urgently required in industries such as portable electronic devices (such as mobile phones, tablet computers, and notebook computers), uncrewed aerial vehicles, and electric vehicles. To enable a lithium-ion battery, which is an energy storage device, to meet the foregoing requirements, a measure commonly used in the industry is to pre-add, to a lithium-ion battery system, a pre-lithiation agent capable of providing active lithium, to compensate for irreversible loss of active lithium during battery preparation and cycling.

Currently, pre-lithiation in a battery may be mainly classified into positive-electrode pre-lithiation and negative-electrode pre-lithiation. During the positive-electrode pre-lithiation, a positive-electrode pre-lithiation agent is added to a positive electrode system of the battery. Currently, a few types of positive-electrode pre-lithiation agents are available, and are usually lithium-rich materials such as Li₂NiO₂ and Li₆CoO₄; and residues left on a positive electrode side after delithiation of these positive-electrode pre-lithiation agents increase impedance of an electrochemical cell, catalyze electrolyte to produce gas, and the like.

### SUMMARY

In view of this, embodiments of this application provide a positive-electrode pre-lithiation agent. An oxide positive-electrode active material in which an intensity ratio of a crystal plane diffraction peak (003) to a crystal plane diffraction peak (104) is less than or equal to 2 is used as a catalyst, and the catalyst can catalyze a lithium-rich material to release active lithium at a low voltage. In addition, residues left on a positive electrode side after delithiation of the positive-electrode pre-lithiation agent do not increase a risk of gas production by electrolyte or impedance of an electrochemical cell. This extends a range of choices of positive-electrode pre-lithiation agents.

Specifically, a first aspect of embodiments of this application provides a positive-electrode pre-lithiation agent. The positive-electrode pre-lithiation agent includes a catalyst and a lithium-rich material, where the catalyst is an oxide positive-electrode active material, an intensity ratio of a crystal plane diffraction peak (003) of the catalyst to a crystal plane diffraction peak (104) of the catalyst is less than or equal to 2, the catalyst is configured to catalyze the lithium-rich material to decompose to release active lithium, and the lithium-rich material includes at least one of lithium oxide, lithium peroxide, lithium fluoride, lithium carbonate, lithium oxalate, and lithium acetate.

The positive-electrode pre-lithiation agent provided in this embodiment of this application includes the lithium-rich material and the catalyst. The catalyst is an oxide positive-electrode active material with a special XRD property, has high catalytic activity, and can catalyze, in a battery formation stage, a lithium-rich material that originally has a high delithiation potential to decompose at a low potential to release active lithium ions. This extends a range of choices of positive-electrode pre-lithiation agents. The positive-electrode pre-lithiation agent has a high pre-lithiation capacity, and can well compensate for irreversible consumption of active lithium in a battery. This helps improve battery performance. In addition, a few residues are left on a positive electrode side after delithiation of the positive-electrode pre-lithiation agent, without increasing a risk of gas production by electrolyte, increasing impedance of an electrochemical cell, or reducing battery energy density.

In some implementations of this application, the intensity ratio of the crystal plane diffraction peak (003) of the catalyst to the crystal plane diffraction peak (104) of the catalyst ranges from 1.0 to 1.8. In this case, catalytic activity of the catalyst is higher.

In an implementation of this application, the oxide positive-electrode active material includes at least one of lithium cobalt oxide, lithium manganese oxide, lithium nickel oxide, lithium nickel cobalt oxide, lithium nickel manganese oxide, lithium nickel cobalt manganate, and lithium nickel cobalt aluminate.

In some implementations of this application, the oxide positive-electrode active material further includes a doping element, and the doping element includes at least one of B, P, N, Mg, Al, Ca, Ba, La, Zr, Mo, Nb, Ti, V, Sn, Sb, Cr, Fe, Cu, and Zn. An appropriate doping element can change an internal electron orbit overlapping status or surface properties of the oxide positive-electrode active material, improve structural stability, and the like.

In an implementation of this application, a particle size of the catalyst ranges from 10 nm to 25 µm. The particle size of the catalyst may be selected based on electrochemical activity of the lithium-rich material. For example, when the electrochemical activity of the lithium-rich material is low, a catalyst with a smaller particle size is more helpful for decomposition of the lithium-rich material.

In an implementation of this application, the lithium-rich material covers a surface of the catalyst, and/or the catalyst is dispersed in the lithium-rich material. In this way, catalytic activity of the catalyst can be utilized to a large extent.

In an implementation of this application, a mass ratio of the lithium-rich material to the catalyst is 1:(0.01 to 100). The mass ratio of the lithium-rich material to the catalyst can be controlled to adjust an initial delithiation capacity of the positive-electrode pre-lithiation agent.

In some implementations of this application, the lithium-rich material forms a lithium-rich material coating layer with a thickness of 10 nm to 20 µm on the surface of the catalyst. Catalytic activity of the catalyst can be utilized to a large extent when the lithium-rich material covers the catalyst.

In some implementations of this application, the positive-electrode pre-lithiation agent further includes a protective layer wrapped around the catalyst and the lithium-rich material, and the protective layer has ion conductivity. The protective layer can further improve stability and processing performance of the positive-electrode pre-lithiation agent, especially when the lithium-rich material is the lithium oxide or the lithium peroxide.

In an implementation of this application, a material of the protective layer includes at least one of lithium fluoride, lithium carbonate, lithium oxalate, lithium acetate, lithium phosphate, inorganic conductive carbon, organic polymer, and inert oxide. These protective layers do not increase a risk of gas production by electrolyte of a battery.

In an implementation of this application, a thickness of the protective layer ranges from 5 nm to 200 nm. A protective layer with an appropriate thickness can ensure high processing performance of the positive-electrode pre-lithiation agent, and can also prevent an excessively large thickness from affecting timely release of active lithium, increasing battery impedance, and the like.

In an implementation of this application, mass of the protective layer is 0.01% to 10% of mass of the positive-electrode pre-lithiation agent. A mass proportion of the protective layer is low, so that the positive-electrode pre-lithiation agent can have high processing performance without excessively increasing mass of residues left after delithiation of the positive-electrode pre-lithiation agent.

In an implementation of this application, a particle size of the positive-electrode pre-lithiation agent ranges from 50 nm to 30 µm.

A second aspect of embodiments of this application further provides a preparation method for a positive-electrode pre-lithiation agent, including:
performing lattice reconstruction on an oxide positive-electrode active material to obtain a catalyst, and then performing physical fusion on the catalyst and a lithium-rich material to obtain a positive-electrode pre-lithiation agent; or
mixing an oxide positive-electrode active material and a lithium-rich material, and then performing high-energy ball milling to obtain a positive-electrode pre-lithiation agent, where the positive-electrode pre-lithiation agent includes a catalyst and the lithium-rich material, and the catalyst is a lattice-reconstructed oxide positive-electrode active material, where
an intensity ratio of a crystal plane diffraction peak (003) of the catalyst to a crystal plane diffraction peak (104) of the catalyst is less than or equal to 2, the catalyst is configured to catalyze the lithium-rich material to decompose to release active lithium, and the lithium-rich material includes at least one of lithium oxide, lithium peroxide, lithium fluoride, lithium carbonate, lithium oxalate, and lithium acetate.

In some implementations of this application, a manner of the lattice reconstruction includes one of the following manners: (a) performing high-energy ball milling on the oxide positive-electrode active material; or (b) performing high-energy ball milling on the oxide positive-electrode active material and a compound of a group-III element and/or a group-V element, and then performing sintering.

In some implementations of this application, a rotational speed of the high-energy ball milling is greater than or equal to 350 r/min.

In some implementations of this application, the physical fusion is low-speed ball milling with a rotational speed of less than or equal to 300 r/min.

In some implementations of this application, the preparation method further includes: constructing a protective layer wrapped around the catalyst and the lithium-rich material, especially when the lithium-rich material includes at least one of the lithium oxide and the lithium peroxide. In a specific embodiment, a manner of constructing the protective layer includes: placing, in dry air or carbon dioxide atmosphere for heat treatment, a core material obtained by performing physical fusion on the catalyst and the lithium-rich material. In this way, a dense lithium carbonate protective layer can be generated in situ.

The preparation method for a positive-electrode pre-lithiation agent provided in the second aspect of embodiments of this application has a simple process, is efficient and environmentally friendly, and can be used for mass production.

A third aspect of embodiments of this application further provides a positive electrode plate for a battery. The positive electrode plate for a battery includes a current collector and a positive-electrode material layer provided on the current collector. The positive-electrode material layer includes the positive-electrode pre-lithiation agent according to the first aspect of embodiments of this application, a positive-electrode active material, a binder, and a conductive agent.

During preparation of the positive electrode plate for a battery, a positive electrode slurry used to form the positive-electrode material layer has adjustable viscosity and does not undergo a jellification phenomenon, and therefore can be easily applied to obtain a film layer with high flatness. An electrode plate including the positive-electrode pre-lithiation agent can be used to provide an electrochemical battery with high energy density and long cycle life.

A fourth aspect of embodiments of this application further provides an electrochemical battery, including a positive electrode, a negative electrode, and a separator and electrolyte that are located between the positive electrode and the negative electrode, where the positive electrode is the positive electrode plate for a battery according to the third aspect of embodiments of this application. The electrochemical battery has high energy density and long cycle life.

A fifth aspect of embodiments of this application further provides a terminal. The terminal includes a housing, and a mainboard and a battery that are located in the housing. The battery includes the electrochemical battery according to the fourth aspect of embodiments of this application, and the electrochemical battery is configured to supply power to the terminal. The terminal may be an electronic product such as a mobile phone, a notebook computer, a tablet computer, a portable device, or an intelligent wearable product.

### BRIEF DESCRIPTION OF DRAWINGS

FIG. 1 is a schematic diagram of a structure of a positive-electrode pre-lithiation agent according to an implementation of this application;
FIG. 2a is a schematic diagram of a structure of a positive-electrode pre-lithiation agent according to an implementation of this application;
FIG. 2b is a schematic diagram of a structure of a positive-electrode pre-lithiation agent according to another implementation of this application;
FIG. 2c is a schematic diagram of a structure of a positive-electrode pre-lithiation agent according to still another implementation of this application;
FIG. 3 is a schematic diagram of a structure of a positive electrode plate for a battery according to an implementation of this application;
FIG. 4 is a schematic diagram of a structure of a terminal according to an embodiment of this application;
FIG. 5 is an X-ray diffraction (XRD) diagram of a catalyst in a positive-electrode pre-lithiation agent according to Embodiment 1 of this application;
FIG. 6 is an XRD diagram of a positive-electrode pre-lithiation agent according to Embodiment 1 of this application; and
FIG. 7 shows a charge/discharge curve (a) of a positive-electrode pre-lithiation agent and a charge/discharge curve (b) of a button cell prepared by combining the positive-electrode pre-lithiation agent and lithium cobalt oxide according to Embodiment 1.

### DESCRIPTION OF EMBODIMENTS

A lithium-ion battery mainly includes a positive electrode, a negative electrode, electrolyte, and a separator. All active lithium in the lithium-ion battery is provided by a positive-electrode material. However, because initial coulombic efficiency of the positive-electrode material and initial coulombic efficiency of a negative-electrode material do not match, a solid electrolyte interphase film (SEI film) is formed on a surface of the negative electrode during initial charging of the battery, and the like, some active lithium in the positive electrode is consumed at the negative electrode. This leads to loss of recyclable lithium, affects utilization of a gram capacity of the positive-electrode material of the battery, and reduces battery energy density. In addition, some irreversible chemical side reactions and a thickness increase of the SEI due to a size change of the negative-electrode material during cycling of the battery also cause consumption of a large amount of active lithium, affecting service life of the battery. To improve energy density, cycle performance, and the like of the lithium-ion battery, embodiments of this application provide a positive-electrode pre-lithiation agent with good pre-lithiation effect. The following describes embodiments of this application with reference to accompanying drawings in embodiments of this application.

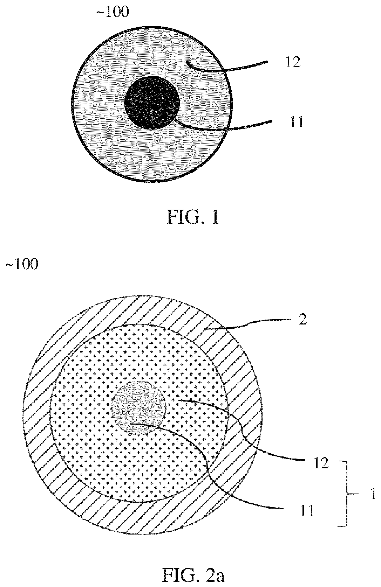

As shown in FIG. 1, an embodiment of this application provides a positive-electrode pre-lithiation agent 100 for a positive electrode of a battery. The positive-electrode pre-lithiation agent 100 includes a catalyst 1 and a lithium-rich material 12. A material of the catalyst 11 is an oxide positive-electrode active material. An intensity ratio of a crystal plane diffraction peak (003) of the catalyst 11 to a crystal plane diffraction peak (104) of the catalyst 11 is less than or equal to 2. The catalyst 11 is configured to catalyze the lithium-rich material 12 to decompose to release active lithium. The lithium-rich material 12 includes at least one of lithium oxide, lithium peroxide, lithium fluoride, lithium carbonate, lithium oxalate, and lithium acetate.

In an implementation of this application, the lithium-rich material 12 may cover a surface of the catalyst 11 (as shown in FIG. 1), and/or the catalyst 11 is dispersed in the lithium-rich material 12 (not shown in the figure). Catalytic activity of the catalyst 11 can be utilized to a large extent. Further, the lithium-rich material 12 may cover the entire surface of the catalyst 11, which is shown in FIG. 1; or may cover only a part of the surface of the catalyst 11.

The catalyst 11 in the positive-electrode pre-lithiation agent may be referred to as a "lattice-reconstructed oxide positive-electrode active material". Compared with a common oxide positive-electrode active material, the intensity ratio of the crystal plane diffraction peak (003) of the catalyst 11 obtained by performing lattice reconstruction on an oxide positive-electrode active material to the crystal plane diffraction peak (104) of the catalyst 11 is smaller, some crystal planes are exposed, the surface is rough, and the catalyst 11 shows catalytic activity. In addition, the lattice-reconstructed oxide positive-electrode active material has a lower lithiation capacity and a small reversible capacity, and therefore is more suitable for pre-lithiation. In this application, the catalyst 11 can reduce a delithiation potential of the lithium-rich material 12 that originally has a high delithiation potential (in other words, has low electrochemical activity), so that lithium ions are deintercalated from the lithium-rich material 12 within a working voltage range of a lithium-ion battery. This achieves pre-lithiation effect and extends a range of choices of pre-lithiation agents. The term "delithiation potential" in this application is a minimum voltage at which lithium atoms in a material can be deintercalated to electrolyte to become active lithium ions.

In addition, residues left on a positive electrode side after delithiation of the positive-electrode pre-lithiation agent do not increase a risk of gas production by the electrolyte, and do not increase impedance of an electrochemical cell. Specifically, after the positive-electrode pre-lithiation agent 100 in this application is delithiated in a battery formation stage, the catalyst 11 is retained in the positive electrode of the battery. The material of the catalyst 11 is an oxide positive-electrode active material, which does not increase a risk of gas production by the electrolyte, does not introduce an additional substance into the electrochemical cell, and has small impact on impedance of the electrochemical cell. Gaseous delithiation products of some lithium-rich materials (such as the lithium oxide, the lithium peroxide, the lithium carbonate, and the lithium oxalate) may be discharged in an exhaust stage during battery preparation, do not occupy a size or mass of the electrochemical cell, and naturally do not increase gas production by the electrolyte. Delithiation products of some other lithium-rich materials (such as the lithium fluoride and the lithium acetate) do not increase a risk of gas production by the electrolyte either, and can participate in formation of a negative-electrode SEI film of the battery, without increasing impedance of the electrochemical cell. Therefore, the positive-electrode pre-lithiation agent can achieve good pre-lithiation effect, and can well improve battery cycle performance, energy density, and the like.

A delithiation potential of the lithium-rich materials 12 in this application is usually greater than 4.5 V in absence of a catalyst, and is beyond a normal working voltage range of the battery, and therefore the lithium-rich materials 12 are usually not used for pre-lithiation. However, under the action of the catalyst 11 in this application, the lithium-rich materials 12 can release active lithium at a normal battery working voltage lower than 4.2 V. Table 1 shows delithiation potentials and theoretical specific capacities of the lithium-rich materials 12 in absence of a catalyst.

**Table 1 Delithiation potentials and theoretical specific capacities of lithium-rich materials in absence of a catalyst**

| Name | Delithiation potential (V vs. Li/Li⁺) | Theoretical specific capacity (mAh/g) |
|---|---|---|
| Lithium oxide | 4.8 | 1794 |
| Lithium peroxide | 4.5 | 1168 |
| Lithium fluoride | 5.7 | 1033 |
| Lithium carbonate | 4.7 | 725 |
| Lithium oxalate | 4.7 | 526 |
| Lithium acetate | 4.8 | 406 |

It can be learned from Table 1 that, in this implementation of this application, theoretical specific charge capacities (namely, delithiation capacities) of the lithium-rich materials 12 are high, and are greater than 400 mAh/g, and some are greater than 1000 mAh/g. Particularly, these lithium-rich materials 12 have small reversible capacities, and therefore have high actual pre-lithiation capacities. An actual pre-lithiation capacity is a difference between a delithiation capacity and a reversible capacity, and may also be referred to as an "irreversible delithiation capacity". For example, a theoretical delithiation capacity of existing Li₂NiO₂ is 510 mAh/g, and a delithiation capacity measured at 0.1C is 390 mAh/g. However, a reversible capacity of the Li₂NiO₂ is approximately 120 mAh/g, and therefore a pre-lithiation capacity of the Li₂NiO₂ is only 270 mAh/g. However, in this application, an actual pre-lithiation capacity of a positive-electrode pre-lithiation agent that includes a lithium cobalt oxide catalyst and lithium oxalate at a mass ratio of 3:1 can reach 320 mAh/g at 0.1C.

In some implementations of this application, the lithium-rich material 12 is at least one of the lithium oxide, the lithium peroxide, the lithium fluoride, the lithium carbonate, and the like. These lithium-rich materials have high theoretical specific charge capacities, and positive-electrode pre-lithiation agents including the lithium-rich materials can provide high actual pre-lithiation capacities. This helps better improve a battery capacity.

In an implementation of this application, a mass ratio of the lithium-rich material 12 to the catalyst 11 may be 1:(0.01 to 100). In some embodiments, the mass ratio may be 1:(0.1 to 20). In some other embodiments, the mass ratio may be 1:(0.5 to 20). In still some other embodiments, the mass ratio of the lithium-rich material 12 to the catalyst 11 may be 1: (2 to 8). The ratio of the lithium-rich material 12 to the catalyst 11 is controlled to be within an appropriate range, so that an initial delithiation capacity, an actual pre-lithiation capacity, and the like of the positive-electrode pre-lithiation agent 100 can be adjusted. In some implementations of this application, the initial delithiation capacity of the positive-electrode pre-lithiation agent may be flexibly selected within a range of 400 mAh/g to 1700 mAh/g. In some embodiments, the initial delithiation capacity of the positive-electrode pre-lithiation agent may be within a range of 420 mAh/g to 1400 mAh/g. In some other embodiments, the value may be adjusted within a range of 420 mAh/g to 600 mAh/g. For example, when the lithium-rich material is the lithium oxide, and when a mass ratio of the lithium oxide to the catalyst is greater than or equal to 1:4, the initial delithiation capacity of the positive-electrode pre-lithiation agent may be greater than 400 mAh/g.

In an implementation of this application, a pre-lithiation capacity of the positive-electrode pre-lithiation agent 100 is not less than 400 mAh/g. The positive-electrode pre-lithiation agent 100 has a high pre-lithiation capacity, and can fully compensate for irreversible loss of active lithium at a negative electrode of the battery during battery preparation and cycling. This greatly improves battery energy density and cycle life. In some embodiments, the pre-lithiation capacity of the positive-electrode pre-lithiation agent 100 may be 400 mAh/g to 1300 mAh/g. In some other embodiments, the pre-lithiation capacity of the positive-electrode pre-lithiation agent 100 may be 400 mAh/g to 800 mAh/g.

The battery term "battery energy density" indicates a quantity of electricity stored in a battery per unit weight or size. The battery energy density may be obtained by multiplying a specific capacity of an electrode material by a discharge voltage. The value is essentially equal to an amount of active lithium divided by a total size or total mass of the battery. A higher pre-lithiation capacity provided by a pre-lithiation agent indicates smaller mass of residues left after pre-lithiation and a greater increase in the battery energy density.

In some implementations of this application, the lithium-rich material 12 is at least one of the lithium oxide, the lithium peroxide, the lithium carbonate, and the lithium oxalate. Delithiation products of these lithium-rich materials are oxygen, nitrogen, or CO₂ gas, and may be discharged in an exhaust stage during battery preparation. In this case, a mass residue degree (that is, a ratio of mass of residues to mass of the positive-electrode pre-lithiation agent before delithiation) of the positive-electrode pre-lithiation agent after delithiation is low. This causes a quite slight increase in a size and mass of the battery, and is quite helpful for increasing the battery energy density.

In some implementations of this application, after the positive-electrode pre-lithiation agent is added, the battery energy density can be increased by 0.5% to 2%, and the cycle life can be increased by 30% to 50%.

In some implementations of this application, the intensity ratio of the crystal plane diffraction peak (003) of the catalyst 11 to the crystal plane diffraction peak (104) of the catalyst 11 may be less than or equal to 1.8, for example, within a range of 1.0 to 1.8, or 1.4 to 1.8. An intensity ratio of a crystal plane diffraction peak (003) of an oxide positive-electrode active material without undergoing lattice reconstruction to a crystal plane diffraction peak (104) of the oxide positive-electrode active material is usually greater than 2. Compared with the oxide positive-electrode active material, a smaller ratio of the catalyst 11 indicates a higher lattice reconstruction degree and higher catalytic activity of the catalyst 11, so that a lithium-rich material with low electrochemical activity can produce active lithium at a low delithiation potential.

In this application, the oxide positive-electrode active material may belong to a non-doped type or a doped type. In some implementations of this application, the oxide positive-electrode active material may include at least one of lithium cobalt oxide, lithium manganese oxide, lithium nickel oxide, lithium nickel cobalt oxide, lithium nickel manganese oxide, lithium nickel cobalt manganate, lithium nickel cobalt aluminate, and the like, but is not limited thereto. The lithium nickel oxide, the lithium nickel cobalt manganate, and the lithium nickel cobalt aluminate usually have a layered crystal structure, the lithium manganese oxide has a spinel structure, and the lithium cobalt oxide and the lithium nickel manganese oxide may have a layered structure and/or a spinel structure. A general structural formula of the lithium cobalt oxide, the lithium manganese oxide, and the lithium nickel oxide may be any one of LiMO₂, Li₂MO₂, Li₂MO₃, Li₂MO₄, Li₃MO₄, Li₅MO₄, and Li₆MO₄, where M may represent Ni, Co, or Mn.

In some other implementations of this application, the oxide positive-electrode active material may further include a doping element. In this case, the oxide positive-electrode active material belongs to a doped type, and the doping element may include at least one of B, P, N, Mg, Al, Ca, Ba, La, Zr, Mo, Nb, Ti, V, Sn, Sb, Cr, Fe, Cu, Zn, and the like. The lithium nickel cobalt oxide preferably does not include the doping element Al, to avoid overlapping with a lithium nickel cobalt aluminate ternary material. An appropriate doping element may be introduced to implement at least one of the following: changing an internal electron orbit overlapping status or surface properties of the oxide positive-electrode active material, improving structural stability, and the like.

In some implementations of this application, the positive-electrode pre-lithiation agent may further include a protective layer 2, and the protective layer 2 is wrapped around the catalyst 11 and the lithium-rich material 12. When the lithium-rich material 12 is at least one of the lithium fluoride, the lithium carbonate, the lithium oxalate, and the lithium acetate, these lithium-rich materials have high stability in the air, and the protective layer 2 may be provided, or certainly, no protective layer may be provided. When no protective layer 2 is provided in the positive-electrode pre-lithiation agent, the lithium-rich material 2 preferably covers the surface of the catalyst 11. Particularly, when the lithium-rich material 12 is the lithium oxide and/or the lithium peroxide, the protective layer 2 may be provided to ensure higher processing performance and structural stability of the positive-electrode pre-lithiation agent.

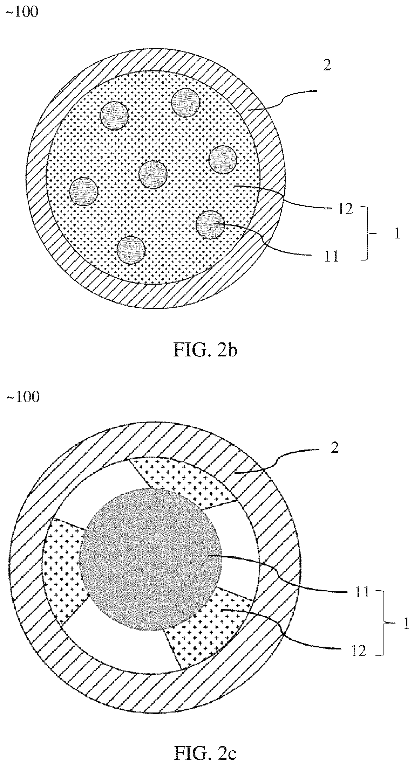

Specifically, refer to FIG. 2a, FIG. 2b, and FIG. 2c together. The positive-electrode pre-lithiation agent 100 has a core-housing structure, and includes a core 1 and a protective layer 2 wrapped around the core 1. The core 1 includes a catalyst 11 and a lithium-rich material 12. In the core 10, the lithium-rich material 12 may cover a surface of the catalyst 11 (as shown in FIG. 2a and FIG. 2c), and/or the catalyst 11 is dispersed in the lithium-rich material 12 (as shown in FIG. 2b). That is, a structure of the positive-electrode pre-lithiation agent 100 may include at least one of the structures shown in FIG. 2a to FIG. 2c. The lithium-rich material 12 may cover the entire surface of the catalyst 11 (as shown in FIG. 2a), or may cover only a part of the surface of the catalyst 11 (as shown in FIG. 2c).

The protective layer 2 is provided, so that the catalyst 11 and the lithium-rich material 12 are basically not in contact with the air, and do not absorb moisture, carbon dioxide, oxygen, or the like in the air to cause deterioration of a pre-lithiation capability. This further improves stability of the positive-electrode pre-lithiation agent. In addition, compared with lithium-rich materials such as Li₂NiO₂ and Li₆CoO₄ in the conventional technology, the lithium-rich material 12 herein has low chemical activity, and therefore has high structural stability. In addition, the protective layer 2 is provided, so that the lithium-rich material 12 is not in direct contact with a positive electrode slurry in the case of high alkalinity. Therefore, the positive-electrode pre-lithiation agent 100 has high processing performance, and is well compatible with a conventional preparation process for a positive electrode of a lithium-ion battery, without reducing fluidity of the positive electrode slurry or affecting coating effect.

In an implementation of this application, a material of the protective layer 2 is a material with ion conductivity. In this way, subsequent release of active lithium by the lithium-rich material is not affected. Optionally, ion conductivity of a constituent material of the protective layer 2 at room temperature is greater than 10 ⁻⁸ S·cm ⁻¹. The material of the protective layer 2 may include at least one of lithium fluoride, lithium carbonate, lithium oxalate, lithium acetate, inorganic conductive carbon, organic polymer, inert oxide, and the like. In addition, in FIG. 2a, FIG. 2b, and FIG. 2c, the material of the protective layer 2 is different from a material of the lithium-rich material 12. The protective layer 2 has high stability in the air and is not likely to absorb water, oxygen, or the like, and has low alkalinity. A positive-electrode pre-lithiation agent with the protective layer can have high stability in the air and processing performance. In addition, after the positive-electrode pre-lithiation agent is delithiated, the residual protective layer (except when the protective layer is made of the lithium carbonate) does not increase a risk of gas production by electrolyte of the battery.

Specifically, examples of the inorganic conductive carbon may be amorphous carbon and graphene; examples of the organic polymer may be poly-p-xylylene and derivatives thereof, polyacrylate such as polymethyl methacrylate (PMMA), and polyolefin such as polyethylene (PE) and polystyrene; and examples of the inert oxide may be silicon dioxide, oxides of group-I to group-III metal elements (such as aluminum oxide, magnesium oxide, and barium oxide), and non-catalytic transition metal oxides (such as titanium dioxide, zinc oxide, zirconia, and tin oxide). When the protective layer 2 is made of the inorganic conductive carbon, conductivity of the positive-electrode pre-lithiation agent can be further improved. When the protective layer 2 is made of the lithium carbonate, the positive-electrode pre-lithiation agent also decomposes to produce gas during delithiation, so that a quite small amount of residues are left after delithiation of the positive-electrode pre-lithiation agent. This further reduces impact of the positive-electrode pre-lithiation agent on mass and a size of the battery, and helps improve battery energy density.

In an implementation of this application, a thickness of the protective layer 2 may be within a range of 5 nm to 200 nm. In some implementations of this application, the thickness of the protective layer 2 may be 10 nm to 100 nm. The thickness of the protective layer 2 may be adjusted based on a size of the core. A protective layer 2 with an appropriate thickness can ensure high processing performance of the positive-electrode pre-lithiation agent 100, and can also prevent an excessively large thickness from affecting timely release of active lithium and increasing battery impedance.

In some implementations of this application, mass of the protective layer 2 may account for 0.01% to 10% of mass of the positive-electrode pre-lithiation agent 100. The low mass proportion enables the protective layer to ensure high processing performance of the positive-electrode pre-lithiation agent. Even if the protective layer 2 is not made of the lithium carbonate, the low mass proportion can also ensure small mass of residues left after delithiation of the positive-electrode pre-lithiation agent.

In an implementation of this application, a particle size of the positive-electrode pre-lithiation agent 100 may be within a range of 50 nm to 30 µm. In some implementations of this application, the particle size of the positive-electrode pre-lithiation agent 100 may be 300 nm to 15 µm.

In an implementation of this application, a particle size of the catalyst 11 may be within a range of 10 nm to 25 µm. When the lithium-rich material 12 (for example, the lithium oxide or the lithium acetate) has low electrochemical activity, a catalyst 11 with a smaller particle size is more helpful for decomposition of the lithium-rich material. In some implementations of this application, the particle size of the catalyst 11 may be 10 nm to 20 µm, or may be further 20 nm to 200 nm. For example, in a positive-electrode pre-lithiation agent shown in FIG. 2a, a particle size of a catalyst 11 may be 100 nm to 1 µm; and in a positive-electrode pre-lithiation agent shown in FIG. 2b, a particle size of a catalyst 11 may be 10 nm to 2 µm, for example, may be 10 nm to 450 nm. In some other implementations of this application, as shown in FIG. 2c, a particle size of a catalyst 11 may be 100 nm to 25 µm, for example, may be 500 nm to 15 µm.

In some implementations of this application (as shown in FIG. 1, FIG. 2a, and FIG. 2c), the lithium-rich material 12 covers a surface of the catalyst 11 to form a lithium-rich material coating layer with a specific thickness. Catalytic activity of the catalyst 11 can be utilized to a large extent when the lithium-rich material 12 covers the catalyst 11. A thickness of the lithium-rich material coating layer may range from 5 nm to 200 nm. Specifically, the thickness may be 10 nm to 100 nm, or 20 nm to 90 nm.

The positive-electrode pre-lithiation agent 100 provided in this embodiment of this application has high structural stability and high safety performance, and can efficiently release active lithium at a normal working voltage (not exceeding 4.2 V) of the battery, so that a pre-lithiation capacity is high. In addition, residues left after delithiation of the positive-electrode pre-lithiation agent 100 do not increase a risk of gas production by electrolyte, and do not increase impedance of an electrochemical cell. This helps improve battery cycle performance and energy density.

Correspondingly, an embodiment of this application further provides a preparation method for the positive-electrode pre-lithiation agent. The preparation method includes the following steps.

S01: Perform lattice reconstruction on an oxide positive-electrode active material to obtain a catalyst, where an intensity ratio of a crystal plane diffraction peak (104) of the catalyst to a crystal plane diffraction peak (003) of the catalyst is less than or equal to 2.

S02: Perform physical fusion on the catalyst and a lithium-rich material to obtain a positive-electrode pre-lithiation agent, where the catalyst is configured to catalyze the lithium-rich material to decompose to release active lithium, and the lithium-rich material includes at least one of lithium oxide, lithium peroxide, lithium fluoride, lithium carbonate, lithium oxalate, and lithium acetate.

According to the preparation method, the positive-electrode pre-lithiation agent shown in FIG. 1 in which the lithium-rich material covers the catalyst may be prepared, or a positive-electrode pre-lithiation agent in which a catalyst is dispersed in a lithium-rich material may be prepared.

In step S01, a manner of the lattice reconstruction includes one of the following manners: (a) performing high-energy ball milling on the oxide positive-electrode active material; or (b) performing high-energy ball milling on the oxide positive-electrode active material and a compound of a group-III element and/or a group-V element, and then performing sintering. In this application, after lattice reconstruction is performed on the oxide positive-electrode active material, a surface of the oxide positive-electrode active material becomes rough, and particle distribution changes. In addition, a lattice-reconstructed oxide positive-electrode active material has a lower lithiation capacity and poorer cycle performance, and therefore is more suitable for pre-lithiation.

In the manner a, high-energy ball milling is performed on the oxide positive-electrode active material, to damage an original structure of the oxide positive-electrode active material, and implement lattice reconstruction of the oxide positive-electrode active material. In this way, lithium atoms and transition metal atoms are mixed, and some crystal planes are exposed, to achieve high catalytic activity for catalyzing the lithium-rich material to decompose. In the manner b, high-energy ball milling is performed on the catalyzed lithium-rich material and the compound of the group-III element and/or the group-V element, and then sintering is performed. The compound of the group-III element and/or the group-V element may be used to induce re-growth of crystal in the catalyzed lithium-rich material, and a preferred crystal orientation is selected for growth, to show catalytic activity. In addition, some group-III elements and group-V elements may alternatively be doped into a crystal structure of the oxide positive-electrode active material to serve as doping elements. This can improve structural stability of the obtained catalyst, change surface properties, and the like.

In an implementation of this application, a rotational speed of the high-energy ball milling is greater than 350 r/min. In some embodiments, the rotational speed of the high-energy ball milling may be greater than 400 r/min, for example, may be 400 r/min to 1200 r/min, or 600 r/min to 1000 r/min. In some implementations of this application, a ball-to-powder ratio during the high-energy ball milling may be within a range of (5 to 30):1. Lattice reconstruction can be better implemented at a higher ball-to-powder ratio. In some embodiments, the ball-to-powder ratio during the high-energy ball milling may be within a range of (10 to 30):1.

In the manner b, the group-III element includes at least one of B, Al, Ga, and In, and the group-V element includes at least one of N, P, As, Sb, and Bi. The group-III element and/or the group-V element may be added in a form of an oxide, a nitride, a chloride, a fluoride, a salt, or the like thereof. The compound of the group-III element and/or the group-V element may be specifically boron oxide, boron fluoride, boron chloride, boric acid, sodium borohydride, aluminum oxide, aluminum hydroxide, aluminum chloride, aluminum carbonate, aluminum fluoride, aluminum sulfide, gallium fluoride, gallium chloride, gallium oxide, magnesium phosphate, aluminum phosphate, iron phosphate, lithium aluminum titanium phosphate (LATP), or the like.

In some implementations of this application, in the manner b, mass of the compound of the group-III element and/or the group-V element may account for 0.05% to 10% of a sum of the mass of the compound and mass of the oxide positive-electrode active material. In some embodiments, the mass proportion is 0.5% to 2%, so that orientation-based re-growth can better occur in the oxide positive-electrode active material, to improve lattice reconstruction effect. In the manner b, the sintering may be performed in the air, and temperature for the sintering may be 500°C to 1000°C, for example, 700°C to 800°C. A time of the sintering may be 5 hours to 24 hours, for example, 12 hours to 18 hours. Higher sintering temperature and a longer sintering time are more helpful for crystal re-growth in the oxide positive-electrode active material to obtain a material with high crystallinity.

In this embodiment of this application, in step S02, a manner of the physical fusion may be ball milling, sanding, coating, or the like. In an implementation of this application, the manner of the physical fusion may be low-speed ball milling, and a rotational speed of the low-speed ball milling is less than the rotational speed of the high-energy ball milling in step S01. After the catalyst is obtained, low-speed ball milling is performed on the catalyst and the lithium-rich material, to avoid damaging a lattice structure of the formed catalyst. In some implementations of this application, the rotational speed of the low-speed ball milling is less than or equal to 300 r/min, for example, may be 200 r/min to 300 r/min, or 200 r/min to 250 r/min. In some embodiments, the rotational speed of the low-speed ball milling may be less than 250 r/min. In some implementations of this application, the low-speed ball milling is performed at a low ball-to-powder ratio. For example, the ball-to-powder ratio during the low-speed ball milling may be within a range of (2 to 10):1. In some implementations of this application, a diameter of a grinding ball used in the low-speed ball milling is less than or equal to 10 mm.

In another implementation of this application, the positive-electrode pre-lithiation agent shown in FIG. 1 may alternatively be prepared by using the following method: mixing an oxide positive-electrode active material and a lithium-rich material, and then performing high-energy ball milling. In this case, the lithium-rich material can cover the oxide positive-electrode active material and/or the oxide positive-electrode active material can be dispersed in the lithium-rich material during lattice reconstruction of the oxide positive-electrode active material.

In some other implementations of this application, the preparation method further includes: constructing a protective layer wrapped around the catalyst and the lithium-rich material, especially when the lithium-rich material includes at least one of the lithium oxide and the lithium peroxide.

Specifically, a method for constructing the protective layer may include at least one of physical fusion, physical vapor deposition, chemical vapor deposition, coating, a thermal decomposition method, and an in-situ heat treatment method. The physical fusion may include ball milling, sanding, and the like. The physical vapor deposition may include evaporation deposition, sputtering, and the like. A coating manner may specifically include one or a combination of dispensing, brushing, spraying, dip coating, blade coating, and spin coating. Coating solution used for coating may be a material that directly includes a protective layer; or may be a precursor that includes a protective layer material, where the protective layer material may be subsequently obtained through co-precipitation or a sol-gel method.

In this application, a method for constructing the protective layer may be selected based on a specific material of the protective layer. The physical fusion and coating manners are suitable for constructing protective layers of various materials. The thermal decomposition method is particularly suitable for constructing a protective layer made of an inorganic conductive carbon material. Specifically, an organic carbon source and a core material (that is, a catalyst and a lithium-rich material) may be ground, and then high-temperature heat treatment may be performed, so that the organic carbon source undergoes thermal decomposition to obtain an inorganic conductive carbon layer. The chemical vapor deposition method is suitable for constructing a protective layer with high density and good adhesion by using some organic polymers (for example, poly-p-xylylene such as paracyclophane, and derivatives thereof).

In some implementations of this application, when the lithium-rich material includes at least one of the lithium oxide and the lithium peroxide, the protective layer may be constructed by using the in-situ heat treatment method, specifically including: placing a core material in dry air or carbon dioxide airflow for in-situ heat treatment. In this way, a dense lithium carbonate protective layer can be generated in situ after the lithium oxide and/or the lithium peroxide undergo the in-situ heat treatment. The in-situ heat treatment method is particularly suitable for preparing the positive-electrode pre-lithiation agent shown in FIG. 2a and FIG. 2c. In some embodiments, temperature for the in-situ heat treatment may be 80°C to 400°C, for example, may be 100°C, 120°C, 150°C, 180°C, 200°C, 220°C, 250°C, 300°C, 320°C, 350°C, or 400°C. A time of the in-situ heat treatment may be 0.5 hour to 5 hours.

When the protective layer 2 is provided in the positive-electrode pre-lithiation agent, and when lattice reconstruction of the oxide positive-electrode active material is performed in the manner a, a particle size distribution range of a catalyst is wide, and a particle size ranges from nanometers to micrometers. A particle size of a catalyst prepared in the manner a is usually within a range of 10 nm to 20 µm. A finally obtained positive-electrode pre-lithiation agent may have all the three structures in FIG. 2a to FIG. 2c. When the particle size of the catalyst is large, an obtained positive-electrode pre-lithiation agent mainly has the structure shown in FIG. 2c. A particle size of a catalyst obtained through orientation-based growth in the manner b is small and uniform, and the particle size of the catalyst is usually less than 1 µm, for example, within a range of 10 nm to 450 nm. In this case, a positive-electrode pre-lithiation agent prepared by using the catalyst mainly has the structure shown in FIG. 2b, and may further partially has the structure shown in FIG. 2a.

Certainly, if a structure shown in FIG. 2a to FIG. 2c needs to be selectively obtained, before the catalyst obtained in step S01 is mixed with the lithium-rich material, particle size concentration in the catalyst may be further controlled. Technologies capable of implementing the particle size concentration include but are not limited to cyclosizing, complex frequency sieving, electrostatic grading, jet grading, and the like. In some implementations of this application, particle size distribution of the catalyst may meet the following condition: (D90 particle size - D10 particle size)/D50 particle size < 1.5, to ensure uniform pre-lithiation capabilities of positive-electrode pre-lithiation agents of different batches.

The preparation method for a positive-electrode pre-lithiation agent provided in this embodiment of this application has a simple process, is efficient and environmentally friendly, and can be used for mass production.

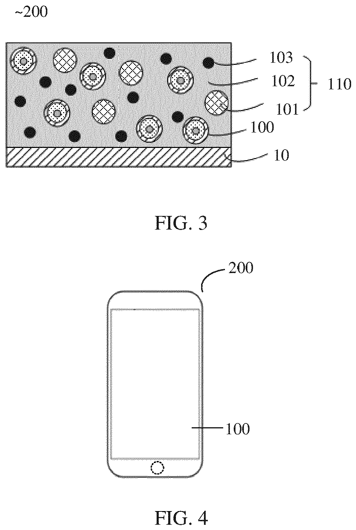

As shown in FIG. 3, an embodiment of this application further provides a positive electrode plate 200 for a battery. The positive electrode plate 200 for a battery includes a current collector 10 and a positive-electrode material layer 110 that is sequentially provided on the current collector 10. The positive-electrode material layer 110 includes the positive-electrode pre-lithiation agent 100 and a positive-electrode active material 101. The positive-electrode material layer 110 may further include a binder 102 and a conductive agent 103.

In an implementation of this application, mass of the positive-electrode pre-lithiation agent 100 may be 0.1% to 40% of mass of the positive-electrode material layer 110. The mass proportion can ensure a high capacity of a battery prepared by using the positive electrode plate 200 for a battery during initial charging/discharging and a plurality of times of non-initial charging/discharging, so that the battery has a high energy density and long cycle life. In some implementations, the mass proportion is 0.5% to 10%.

In an implementation of this application, the positive-electrode material layer 110 may be formed by coating the current collector 10 with a positive electrode slurry including the positive-electrode pre-lithiation agent 100, the positive-electrode active material 101, the binder 102, and the conductive agent 103, and then performing drying and pressing. The positive-electrode pre-lithiation agent 100 has a protective layer that prevents a catalyst and a lithium-rich material in the core material from getting in contact with the binder and the like. In this way, the positive electrode slurry does not undergo a jellification phenomenon, and can be easily applied onto the current collector 10 to obtain a film layer with high flatness.

In an implementation of this application, the current collector 10 includes but is not limited to a metal foil or an alloy foil. The metal foil includes a copper foil, a titanium foil, an aluminum foil, a platinum foil, an iridium foil, a ruthenium foil, a nickel foil, a tungsten foil, a tantalum foil, a gold foil, or a silver foil. The alloy foil includes stainless steel or an alloy including at least one of the following elements: copper, titanium, aluminum, platinum, iridium, ruthenium, nickel, tungsten, tantalum, gold, and silver. Optionally, the foregoing elements are main components of the alloy foil. The metal foil may further include a doping element, and the doping element includes but is not limited to one or more of platinum, ruthenium, iron, cobalt, gold, copper, zinc, aluminum, magnesium, palladium, rhodium, silver, and tungsten. The current collector 10 may be etched or coarsened to form a secondary structure, so as to implement effective contact with the positive-electrode material layer 110.

In this application, the positive-electrode active material 101 may be at least one of lithium iron phosphate, lithium manganese phosphate, lithium manganese iron phosphate, lithium vanadium phosphate, lithium cobalt phosphate, lithium cobalt oxide, lithium manganese oxide, lithium nickel manganese oxide, nickel cobalt manganese (NCM), nickel cobalt aluminum (NCA), and the like.

In this application, the binder and the conductive agent in the positive-electrode material layer 110 are not particularly limited, and may be made of an existing conventional material in the art. For example, the binder 102 may be one or more of styrene-butadiene rubber (SBR), polyvinylidene fluoride (PVDF), polytetrafluoroethylene (PTFE), polyvinyl alcohol (PVA), polypropylene nitrile (PAN), polyimide (PI), polyacrylic acid (PAA), polyolefin, carboxymethyl cellulose (CMC), sodium alginate, and the like. For example, the conductive agent 103 may be one or more of conductive carbon black (for example, acetylene black or Ketjen black), furnace black, carbon nanotubes, carbon fiber, graphene, and the like.

An embodiment of this application further provides an electrochemical battery, including a positive electrode, a negative electrode, a separator, and electrolyte. The separator and the electrolyte are located between the positive electrode and the negative electrode, and the positive electrode is the positive electrode plate 200 for a battery in the foregoing descriptions. The electrochemical battery has high energy density and long cycle life.

The electrochemical battery may be a secondary battery, and has high cycle performance and high safety. Specifically, the secondary battery may be specifically a lithium secondary battery.

As shown in FIG. 4, an embodiment of this application further provides a terminal 300. The terminal 300 may be a mobile phone, or may be an electronic product such as a tablet computer, a notebook computer, a portable device, or an intelligent wearable product. The terminal 300 includes a housing 301 assembled on an outer side of the terminal, and a circuit board and a battery (not shown in the figure) that are located in the housing 301. The battery is the battery provided in the foregoing embodiment of this application. The housing 301 may include a display assembled on a front side of the terminal and a rear cover assembled on a rear side. The battery may be fastened on an inner side of the rear cover, to supply power to the terminal 300.

The following further describes embodiments of this application by using a plurality of embodiments.

### Embodiment 1

A positive-electrode pre-lithiation agent is prepared, including:
Lithium cobalt oxide LiCoO₂ is selected as a catalyst precursor, and undergoes 48-hour high-energy ball milling at a ball-to-powder ratio of 20:1 and a rotational speed of 350 r/min to implement lattice reconstruction, so as to obtain a catalyst. Then the catalyst and a lithium-rich material Li₂O are mixed at a mass ratio of 4:1, and undergo 6-hour common ball milling at a rotational speed of 200 r/min. Then mixed powder obtained through ball milling is placed in a tube furnace and heated to 400°C, and dry air is continuously injected for 2 hours at a flux of 60 sccm, so that a part of Li₂O reacts to form a lithium carbonate protective layer. The temperature is reduced to room temperature, and then the obtained powder is ground and sieved to obtain a positive-electrode pre-lithiation agent.

A soft-pack battery is prepared, including:
(1) A positive electrode plate for a battery is prepared: Monocrystalline LiCoOz with a D50 particle size of 14 µm is used as a positive-electrode active material. The positive-electrode active material, the positive-electrode pre-lithiation agent, a binder PVDF, and a conductive agent carbon nanotubes (CNTs) are weighed at a mass ratio of 94:2:2:2. First, the PVDF is dissolved in an NMP solvent, and then the CNTs are added and evenly dispersed. Then the positive-electrode active material and the positive-electrode pre-lithiation agent are simultaneously added and are evenly dispersed to obtain a positive electrode slurry with a viscosity of 3 Pa·s to 8 Pa·s and a fineness of less than 25 µm. The positive electrode slurry is filtered and then applied onto an aluminum foil current collector, and then drying, rolling, and die cutting are performed to obtain a positive electrode plate.
(2) A negative electrode plate is prepared:
   A silica graphite negative-electrode active material (a specific capacity is 500 mAh/g, and initial efficiency is 83%), conductive carbon black, styrene-butadiene rubber (SBR), and carboxymethyl cellulose (CMC) are dispersed in deionized water at a weight ratio of 96.0:1.0:1.5:1.5, and are evenly mixed t obtain a negative electrode slurry. The negative electrode slurry is applied onto a copper foil, and drying, compacting, and slicing are performed to obtain a negative electrode plate.
(3) A battery is assembled: 1 mol/L LiPF₆ EC and DEC mixed solution (a volume ratio of EC to DEC is 1:1) is used as electrolyte. A three-layer separator made of PP, PE, and PP is used as a separator. In a glove box, the positive electrode plate, the separator, and the negative electrode plate are stacked in sequence and are wound into a square unpackaged cell. The unpackaged cell is placed into a battery housing and welded. Then the electrolyte is injected into the battery housing, the battery housing is sealed, and an air bag is reserved, to obtain a soft-pack battery with a rated capacity of approximately 2270 mAh for testing battery performance.

Before an electrochemical performance test is performed on the soft-pack battery, formation is performed on an electrochemical cell to activate a positive-electrode active material and a negative-electrode active material in the electrochemical cell, and form a stable SEI film at a negative electrode, so as to improve self-discharge and charge/discharge performance, storage performance, and the like of the battery. In a battery formation stage, gas is produced during film formation in the electrochemical cell. The positive-electrode pre-lithiation agent in Embodiment 1 of this application also produces oxygen gas during delithiation, and the gas enters the air bag. After the formation is completed, the air bag may be cut off, and a cutting opening may be closed to obtain a to-be-delivered battery. A specific formation process is as follows: After temperature rises to 80°C, the battery is charged for 12 min at a constant charge/discharge rate of 0.1C, and then charged for 9 min at a constant current of 0.5C, and then charged for 38 min at 1C. In the foregoing charging process, a voltage is limited to 4.48 V. Then the battery is discharged for 3 minutes at 1.0C, where a voltage is limited to 3.0 V. Then temperature is reduced to 45°C, and the battery is charged to 4.48 V at a constant current and constant voltage of 0.2C, where a cutoff voltage is 0.025C. Then the battery is discharged for 60 min at 0.5C, where a voltage is limited to 3.0 V.

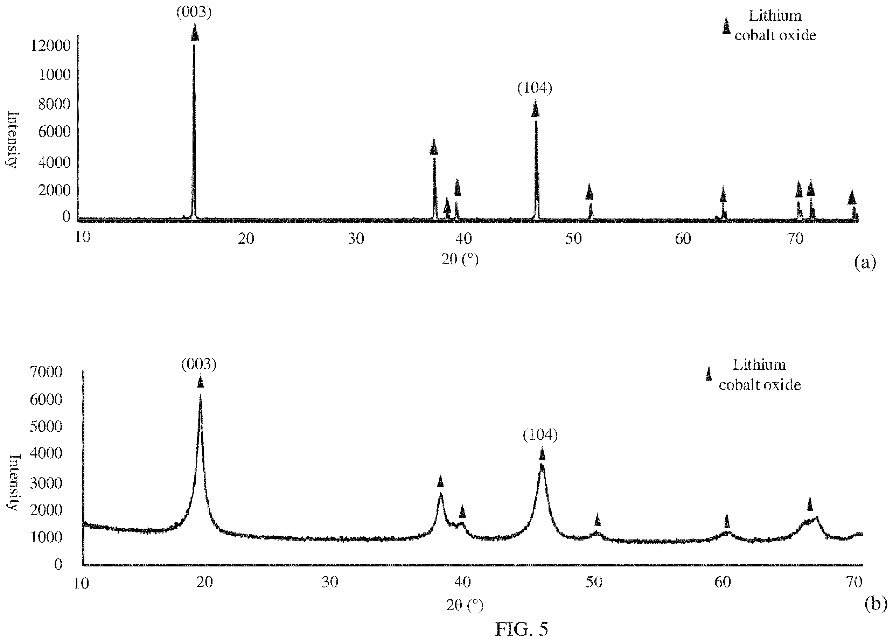

FIG. 5 shows an XRD diagram (b) of the catalyst used in Embodiment 1, and an XRD diagram (a) of the catalyst precursor used in Embodiment 1. It can be learned from FIG. 5 that an intensity ratio of a crystal plane diffraction peak (003) to a crystal plane diffraction peak (104) in an XRD diagram of the LiCoOz before lattice reconstruction is greater than 2.2; and an intensity ratio of a crystal plane diffraction peak (003) to a crystal plane diffraction peak (104) of lattice-reconstructed LiCoOz (that is, the catalyst) is less than or equal to 2. In (a) in FIG. 5, the ratio is specifically 1.65. It can be learned that characteristics of the XRD diagrams of the LiCoO₂ before lattice reconstruction and the lattice-reconstructed LiCoOz vary greatly, and the lattice-reconstructed LiCoOz has specific catalytic activity.

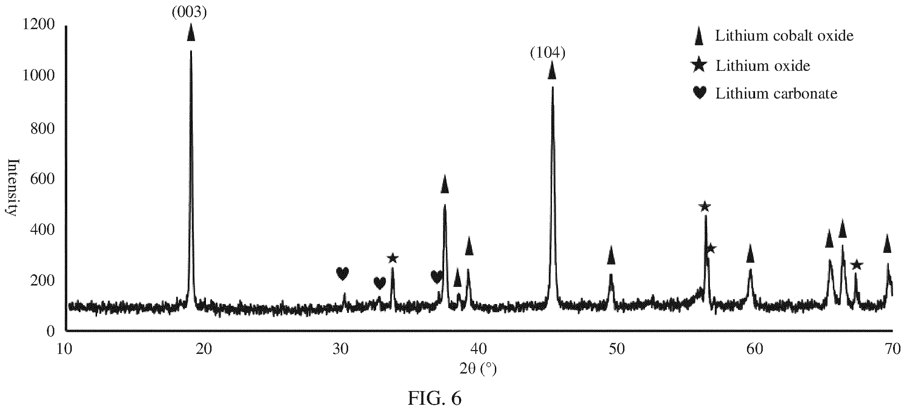

FIG. 6 is an XRD diagram of the positive-electrode pre-lithiation agent in Embodiment 1. It can be learned from FIG. 6 that characteristic peaks of the catalyst (the LiCoO₂), the lithium-rich material (the Li₂O), and the protective layer (the lithium carbonate) are shown. This indicates that a composite material including the catalyst, the lithium-rich material, and the protective layer, that is, the positive-electrode pre-lithiation agent, is successfully prepared.

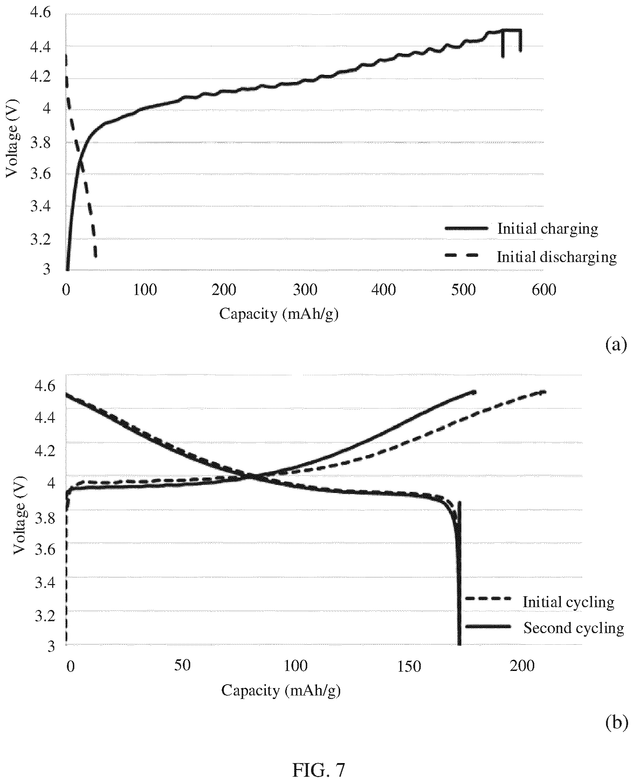

In addition, the positive-electrode pre-lithiation agent in Embodiment 1 is separately assembled into a button half-cell, and the positive-electrode pre-lithiation agent and lithium cobalt oxide are mixed at a ratio of 5%:95% to prepare a button half-cell, to perform a charge/discharge test. Results are shown in FIG. 7. FIG. 7 shows a charge/discharge curve (a) of the positive-electrode pre-lithiation agent in Embodiment 1, and a charge/discharge curve (b) of a button cell prepared by combining the positive-electrode pre-lithiation agent and a lithium cobalt oxide positive-electrode active material at a mass ratio of 5%:95%. A process of separately assembling the positive-electrode pre-lithiation agent in Embodiment 1 into a button half-cell is as follows: The positive-electrode pre-lithiation agent, acetylene black, and PVDF are weighed at a ratio of 8:1:1, and a solvent is added to prepare a positive electrode slurry. The positive electrode slurry is applied onto an aluminum foil current collector and is dried, and then rolling and slicing are performed to obtain a positive electrode plate. The positive electrode plate is used with a lithium metal sheet, 1 mol/L LiPF₆ EC and DEC mixed solution (a volume ratio of EC to DEC is 1:1) is used as electrolyte, and a three-layer separator made of PP, PE, and PP is used as a separator, to prepare a half-cell. A charge/discharge test is performed on the half-cell at a charge/discharge rate of 0.05C, and a test voltage range for the positive electrode plate is 3 V to 4.5 V.

It can be learned from (a) in FIG. 7 that the positive-electrode pre-lithiation agent can contribute a delithiation capacity of approximately 500 mAh/g at initial delithiation, and a reversible capacity (namely, a discharge capacity) is less than 50 mAh/g. Therefore, it can be determined through calculation that a pre-lithiation capacity of the positive-electrode pre-lithiation agent is greater than 450 mAh/g. It can be learned from (b) in FIG. 7 that an initial charge capacity of a button cell obtained by combining the positive-electrode pre-lithiation agent and lithium cobalt oxide may reach 210 mAh/g, and a charge capacity of a button cell made of pure lithium cobalt oxide is 180 mAh/g. It can be learned that the positive-electrode pre-lithiation agent with a proportion of 5% provides an additional capacity of approximately 30 mAh/g for a positive electrode during initial charging of the cell.

Residues left after delithiation of the positive-electrode pre-lithiation agent in Embodiment 1 of this application are trace amounts of LiCoOz particles, and particle sizes of the LiCoOz particles are distributed between 50 nm and 20 µm.

### Embodiment 2

A positive-electrode pre-lithiation agent is prepared, including:
Commercially available lithium cobalt oxide powder whose particle size is within a range of 2 µm to 50 µm is selected as a catalyst precursor, and boron oxide powder and lithium aluminum titanium phosphate (LATP) powder are added to the lithium cobalt oxide powder to obtain mixed powder, where mass of the boron oxide powder and mass of the LATP powder each account for 1% of mass of the mixed powder. The mixed powder is placed into a ball mill, and undergoes 12-hour high-energy ball milling at a ball-to-powder ratio of 15:1 and a rotational speed of 380 r/min. Then the mixed powder is transferred to a tube furnace, is sintered in air atmosphere for 8 hours at 700°C, and is ground and sieved to obtain lattice-reconstructed lithium cobalt oxide, that is, a catalyst. A particle size of the catalyst is 10 nm to 2 µm, and an intensity ratio of a crystal plane diffraction peak (003) of the catalyst to a crystal plane diffraction peak (104) of the catalyst is 1.55.

The catalyst and a lithium-rich material Li₂O are mixed at a mass ratio of 3:1, and undergo 3-hour common ball milling at a rotational speed of 250 r/min. Then mixed powder obtained through ball milling is taken out, and is ground and sieved to obtain a core material. Nano-γ-Al₂O₃ powder (with a mass proportion of 0.2%) with a D50 particle size of 30 nm is added to the core material, undergoes 2-hour ball milling at a ball-to-powder ratio of 2:1 and a rotational speed of 150 r/min, and is then ground and sieved to obtain a positive-electrode pre-lithiation agent.

The positive-electrode pre-lithiation agent in Embodiment 2 includes the structure shown in FIG. 2b, where a thickness of a protective layer is 20 nm, a core includes lithium oxide and a catalyst dispersed in the lithium oxide, and the catalyst is in a flat shape and has a D50 particle size of approximately 200 nm.

According to the manner described in Embodiment 1, the positive-electrode pre-lithiation agent in Embodiment 2 is used to prepare a soft-pack battery with a rated capacity of approximately 2270 mAh.

### Embodiment 3

A positive-electrode pre-lithiation agent is prepared, including: A lithium cobalt oxide LiCoO₂ material (with a D50 particle size of 14 µm) whose particle size is within a range of 5 µm to 20 µm is selected as a catalyst precursor, and undergoes 14-hour high-energy ball milling at a ball-to-powder ratio of 10:1 and a rotational speed of 400 r/min to implement lattice reconstruction, so as to obtain a catalyst. The catalyst and lithium oxalate Li₂C₂O₄ are mixed at a mass ratio of 3:1, and undergo 8-hour low-speed ball milling at a ball-to-powder ratio of 8:1 and a rotational speed of 200 r/min, and obtained powder is ground and sieved to obtain a positive-electrode pre-lithiation agent.

A structure of the positive-electrode pre-lithiation agent in Embodiment 3 may be shown in FIG. 1, and the positive-electrode pre-lithiation agent includes a catalyst (lattice-reconstructed lithium cobalt oxide) and a lithium-rich coating layer Li₂C₂O₄ wrapped around the catalyst. An intensity ratio of a crystal plane diffraction peak (003) of the catalyst to a crystal plane diffraction peak (104) of the catalyst is 1.7. A thickness of the Li₂C₂O₄ layer is approximately 0.5 µm. A particle size of the pre-lithiation agent is 5.5 µm to 25 µm, and a D50 particle size of the pre-lithiation agent is approximately 15 µm.

According to the manner described in Embodiment 1, the positive-electrode pre-lithiation agent in Embodiment 3 is used to prepare a soft-pack battery with a rated capacity of approximately 2270 mAh.

### Embodiment 4

A positive-electrode pre-lithiation agent is prepared, including: A lithium cobalt oxide LiCoO₂ material (with a D50 particle size of 14 µm) whose particle size is within a range of 5 µm to 20 µm is selected as a catalyst precursor. The catalyst precursor and a lithium-rich material LiF are mixed at a mass ratio of 1:1, and undergo 48-hour high-energy ball milling at a ball-to-powder ratio of 20:1 and a rotational speed of 350 r/min. Then obtained powder is ground and sieved to obtain a positive-electrode pre-lithiation agent. The positive-electrode pre-lithiation agent includes a catalyst (lattice-reconstructed lithium cobalt oxide) and a lithium-rich coating layer LiF wrapped around the catalyst. An intensity ratio of a crystal plane diffraction peak (003) of the catalyst to a crystal plane diffraction peak (104) of the catalyst is 1.45. A thickness of the LiF layer is approximately 2 µm. A D50 particle size of the pre-lithiation agent is approximately 18 µm.

According to the manner described in Embodiment 1, the positive-electrode pre-lithiation agent in Embodiment 4 is used to prepare a soft-pack battery with a rated capacity of approximately 2270 mAh.

### Embodiment 5

A positive-electrode pre-lithiation agent is prepared, including: An NCM811 monocrystalline material (with a D50 particle size of 14 µm) whose particle size is within a range of 5 µm to 30 µm is selected as a catalyst precursor. The catalyst precursor undergoes 48-hour high-energy ball milling at a ball-to-powder ratio of 30:1 and a rotational speed of 400 r/min to implement lattice reconstruction, so as to obtain a catalyst. Then the catalyst and a lithium-rich material Li₂O are mixed at a mass ratio of 4:1, and undergo 3-hour common ball milling at a rotational speed of 250 r/min. Then mixed powder obtained through ball milling is placed in a tube furnace. Dry CH₄ gas is continuously injected, and then vacuum degassing is performed. The foregoing process is repeated three times to exhaust air in the tube furnace. Then a flow rate of the CH₄ gas is controlled at 10 mL/min, and furnace temperature is increased to 900°C and retained for 4 hours to complete graphitized carbon coating. After furnace temperature is reduced to room temperature, the powder is taken out, and the obtained powder is ground and sieved to obtain a positive-electrode pre-lithiation agent.

The positive-electrode pre-lithiation agent in Embodiment 5 includes the structures shown in FIG. 2a and FIG. 2c, where a D50 particle size of the core NCM811 is 14 µm, a thickness of a coating layer formed by coating a surface of the NCM811 with lithium oxide is 1.5 µm, and a thickness of a graphitized carbon protective layer is 20 nm. Residues left after delithiation of the positive-electrode pre-lithiation agent in Embodiment 5 are NCM811 particles and carbon graphitized carbon.

With reference to the methods in the Embodiments 1 to 5, a positive-electrode pre-lithiation agent material in another embodiment is prepared based on parameters listed in Table 2, and a material in which a catalyst does not undergo lattice reconstruction under same conditions in a comparative example is provided. According to the preparation method for a button half-cell in Embodiment 1, a pre-lithiation agent in each embodiment and a corresponding pre-lithiation agent in a comparative example are used to prepare a button cell. A charge/discharge test is performed on the button cell at a rate of 0.05C within a voltage range of 3 V to 4.5 V, to test a charge/discharge curve of each button cell, and a charging gram capacity (namely, a specific delithiation capacity) of each pre-lithiation agent is calculated. Results are shown in Table 2.

**Table 2 Structural parameters and charging gram capacities of pre-lithiation agents**

| Test number | Catalyst | Lithium-rich material | Passivation layer | Mass ratio of the catalyst to the lithium-rich material | Gram capacity in an embodiment (mAh/g) | Gram capacity in a comparative example (mAh/g) |
|---|---|---|---|---|---|---|
| Embodiment 1 | LiCoO₂ | Lithium oxide | Lithium carbonate | 4:1 | 570 | 166 |
| Embodiment 2 | LiCoO₂ | Lithium oxide | Aluminum oxide | 3:1 | 610 | 150 |
| Embodiment 3 | LiCoO₂ | Lithium oxalate | / | 3:1 | 430 | 160 |
| Embodiment 4 | LiCoO₂ | Lithium fluoride | / | 1:1 | 320 | 151 |
| Embodiment 5 | NCM811 | Lithium oxide | Graphitized carbon | 4:1 | 410 | 167 |
| Embodiment 6 | LiCoO₂ | Lithium oxalate | Graphitized carbon | 8:1 | 390 | 153 |
| Embodiment 7 | LiCoO₂ | Lithium peroxide | Amorphous carbon | 2:1 | 570 | 150 |
| Embodiment 8 | LiCoO₂ | Lithium carbonate | / | 1:2 | 410 | 143 |
| Embodiment 9 | LiMnO₂ | Lithium oxide | Lithium phosphate | 4:1 | 398 | 163 |
| Embodiment 10 | LiMnO₂ | Lithium acetate | Amorphous carbon | 1:1 | 340 | 163 |

It can be learned from the test results in Table 2 that, when the catalyst does not undergo lattice reconstruction, the catalyst basically does not have a capability of catalyzing the lithium-rich material. As a result, an obtained composite material has a quite low charging gram capacity, and basically does not have a pre-lithiation capability.

To further emphasize beneficial effect of embodiments of this application, according to the preparation method for a soft-pack full-cell in Embodiment 1, the positive-electrode pre-lithiation agent in the foregoing embodiments and a positive-electrode active material lithium cobalt oxide are mixed at a mass ratio of 2%:98% to prepare a soft-pack battery. An electrochemical performance test in Table 3 is performed on the battery at a constant temperature of 25°C and a charge/discharge rate of 0.7C, where a test voltage range is 3 V to 4.48 V (vs. Li/Li+). In addition, this application further provides performance test results for a lithium cobalt oxide battery (Comparative example 1) in which a conventional positive-electrode pre-lithiation agent Li₂NiO₂ is added and a lithium cobalt oxide full-cell (Comparative example 2) in which no positive-electrode pre-lithiation agent in embodiments of this application is added under same conditions.

**Table 3 Performance test results of batteries**

| Test number | Initial specific discharge capacity at 0.7C (mAh/g) | Volumetric energy density at 0.7C (WH/L) | Initial coulombic efficiency (%) | Capacity retention rate (%) after 400 cycles |
|---|---|---|---|---|
| Embodiment 1 | 2838 | 554.5 | 89.4 | 87.3 |
| Embodiment 2 | 2831 | 554.1 | 89.2 | 88.6 |
| Embodiment 3 | 2737 | 551.6 | 89.5 | 87.5 |
| Embodiment 4 | 2786 | 551.5 | 89.3 | 90.1 |
| Embodiment 5 | 2843 | 554.8 | 89.9 | 88.5 |
| Embodiment 6 | 2710 | 549.0 | 89.1 | 87.2 |
| Embodiment 7 | 2828 | 554.1 | 89.6 | 88.3 |
| Embodiment 8 | 2769 | 553.5 | 89.1 | 87.5 |
| Embodiment 9 | 2840 | 554.6 | 89.4 | 86.4 |
| Embodiment 10 | 2711 | 545.5 | 89.1 | 85.5 |
| Comparative example 1 | 2701 | 531.5 | 87.3 | 83.4 |
| Comparative example 2 | 2659 | 527.9 | 86.2 | 81.2 |

It can be learned from Table 3 that the introduction of the positive-electrode pre-lithiation agent in embodiments of this application greatly improves battery cycle performance, and also improves battery energy density and initial coulombic efficiency to some extent. In addition, when a mass ratio of the positive-electrode pre-lithiation agent in embodiments of this application to a positive-electrode active material is the same as a mass ratio of the conventional pre-lithiation agent Li₂NiO₂ to a positive-electrode active material, the positive-electrode pre-lithiation agent in embodiments of this application can better improve battery energy density, initial coulomb efficiency, and cycle life compared with the conventional pre-lithiation agent Li₂NiO₂.

## Claims

1. A positive-electrode pre-lithiation agent, wherein the positive-electrode pre-lithiation agent comprises a catalyst and a lithium-rich material, the catalyst is an oxide positive-electrode active material, an intensity ratio of a crystal plane diffraction peak (003) of the catalyst to a crystal plane diffraction peak (104) of the catalyst is less than or equal to 2, the catalyst is configured to catalyze the lithium-rich material to decompose to release active lithium, and the lithium-rich material comprises at least one of lithium oxide, lithium peroxide, lithium fluoride, lithium carbonate, lithium oxalate, and lithium acetate.

2. The positive-electrode pre-lithiation agent according to claim 1, wherein the intensity ratio of the crystal plane diffraction peak (003) of the catalyst to the crystal plane diffraction peak (104) of the catalyst ranges from 1.0 to 1.8.

3. The positive-electrode pre-lithiation agent according to claim 1, wherein the oxide positive-electrode active material comprises at least one of lithium cobalt oxide, lithium manganese oxide, lithium nickel oxide, lithium nickel cobalt oxide, lithium nickel manganese oxide, lithium nickel cobalt manganate, and lithium nickel cobalt aluminate.

4. The positive-electrode pre-lithiation agent according to claim 3, wherein the oxide positive-electrode active material further comprises a doping element, and the doping element comprises at least one of B, P, N, Mg, Al, Ca, Ba, La, Zr, Mo, Nb, Ti, V, Sn, Sb, Cr, Fe, Cu, and Zn.

5. The positive-electrode pre-lithiation agent according to claim 1, wherein a particle size of the catalyst ranges from 10 nm to 25 µm.

6. The positive-electrode pre-lithiation agent according to any one of claims 1 to 5, wherein the lithium-rich material covers a surface of the catalyst, and/or the catalyst is dispersed in the lithium-rich material.

7. The positive-electrode pre-lithiation agent according to claim 6, wherein a mass ratio of the lithium-rich material to the catalyst is 1: (0.01 to 100).

8. The positive-electrode pre-lithiation agent according to claim 6, wherein the lithium-rich material forms a lithium-rich material coating layer with a thickness of 10 nm to 20 µm on the surface of the catalyst.

9. The positive-electrode pre-lithiation agent according to any one of claims 1 to 8, wherein the positive-electrode pre-lithiation agent further comprises a protective layer wrapped around the catalyst and the lithium-rich material, and the protective layer has ion conductivity.

10. The positive-electrode pre-lithiation agent according to claim 9, wherein a material of the protective layer comprises at least one of lithium fluoride, lithium carbonate, lithium oxalate, lithium acetate, lithium phosphate, inorganic conductive carbon, organic polymer, and inert oxide.

11. The positive-electrode pre-lithiation agent according to claim 9 or 10, wherein a thickness of the protective layer ranges from 5 nm to 200 nm.

12. The positive-electrode pre-lithiation agent according to any one of claims 9 to 11, wherein mass of the protective layer is 0.01% to 10% of mass of the positive-electrode pre-lithiation agent.

13. The positive-electrode pre-lithiation agent according to any one of claims 1 to 12, wherein a particle size of the positive-electrode pre-lithiation agent ranges from 50 nm to 30 µm.

14. A preparation method for a positive-electrode pre-lithiation agent, wherein the preparation method comprises:
performing lattice reconstruction on an oxide positive-electrode active material to obtain a catalyst, and performing physical fusion on the catalyst and a lithium-rich material to obtain a positive-electrode pre-lithiation agent; or
mixing an oxide positive-electrode active material and a lithium-rich material, and then performing high-energy ball milling to obtain a positive-electrode pre-lithiation agent, wherein the positive-electrode pre-lithiation agent comprises a catalyst and the lithium-rich material, and the catalyst is a lattice-reconstructed oxide positive-electrode active material, wherein
an intensity ratio of a crystal plane diffraction peak (003) of the catalyst to a crystal plane diffraction peak (104) of the catalyst is less than or equal to 2, the catalyst is configured to catalyze the lithium-rich material to decompose to release active lithium, and the lithium-rich material comprises at least one of lithium oxide, lithium peroxide, lithium fluoride, lithium carbonate, lithium oxalate, and lithium acetate.

15. The preparation method according to claim 14, wherein a manner of the lattice reconstruction comprises one of the following manners: (a) performing high-energy ball milling on the oxide positive-electrode active material; or (b) performing high-energy ball milling on the oxide positive-electrode active material and a compound of a group-III element and/or a group-V element, and then performing sintering.

16. A positive electrode plate for a battery, wherein the positive electrode plate for a battery comprises a current collector and a positive-electrode material layer provided on the current collector, and the positive-electrode material layer comprises the positive-electrode pre-lithiation agent according to any one of claims 1 to 15, a positive-electrode active material, a binder, and a conductive agent.

17. The positive electrode plate for a battery according to claim 16, wherein mass of the positive-electrode pre-lithiation agent is 0.1% to 40% of mass of the positive-electrode material layer.

18. An electrochemical battery, comprising a positive electrode, a negative electrode, and a separator and electrolyte that are located between the positive electrode and the negative electrode, wherein the positive electrode is the positive electrode plate for a battery according to claim 16 or 17.

19. A terminal, comprising a housing, and a mainboard and a battery that are located in the housing, wherein the battery comprises the electrochemical battery according to claim 18, and the electrochemical battery is configured to supply power to the terminal.
